# EUROPEAN PATENT APPLICATION

(11) **EP 4 748 609 A1**
(43) Date of publication of application: **27.05.2026**
(21) Application number: 25215603.9
(22) Date of filing: 13.11.2025
(51) Int. Cl.: B60K 35/22, B60K 35/10, B60K 35/29, B60K 35/81

(54) **CONTROLLER**

(30) Priority: 25.11.2024 JP 2024204600
(71) Applicant: Toyota Jidosha Kabushiki Kaisha, Toyota-shi, Aichi-ken 471-8571 (JP)
(72) Inventor: OGAWA, Takahiro, Toyota-shi, 471-8571 (JP); KONDO, Fumio, Toyota-shi, 471-8571 (JP); NAGATA, Jiyunya, Toyota-shi, 471-8571 (JP); ISOBE, Toshiya, Toyota-shi, 471-8571 (JP)
(74) Representative: J A Kemp LLP

(57) **Abstract**

A controller controls an output to a display mounted on a vehicle including an operating member operated to implement a traveling operation. The controller includes a non-transitory computer-readable storage medium and an execution device. The storage medium stores a first video file for playback of a first video and a second video file for playback of a second video. At least one of the first video and the second video includes an image simulating a traveling state of the vehicle. The execution device is configured to cause the display to display the second video in place of the first video on condition that one of the operating members has been operated while the first video is displayed on the display of the vehicle in a stationary state.

## Description

### CROSS-REFERENCE TO RELATED APPLICATIONS

This application is based upon and claims the benefit of priority from Japanese Patent Application No. 2024-204600, filed on November 25, 2024, the entire contents of which are incorporated herein by reference.

### BACKGROUND

### 1. Field

The present disclosure relates to a controller.

### 2. Description of Related Art

JP2024-509999A describes a multimedia content demonstration device. The multimedia content demonstration device, upon selection of a demonstration mode, displays a video in the demonstration mode.

In some cases, a multimedia content demonstration device of the type described in the above publication may control a display mounted on a vehicle. The multimedia content demonstration device may display a video on the vehicle-mounted display while the vehicle is stationary. In this case, the multimedia content demonstration device has room for improvement with respect to the conditions under which the device switches a video currently displayed on the display to a subsequent video.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a controller is configured to control an output to a display mounted on a vehicle including an operating member operated to implement a traveling operation. The controller includes a non-transitory computer-readable storage medium and an execution device. The storage medium stores a first video file for playback of a first video and a second video file for playback of a second video. At least one of the first video or the second video includes an image simulating a state in which the vehicle is traveling. The execution device causes the display to display the second video in place of the first video on condition that the operating member is operated when the vehicle is stationary and the first video is being displayed on the display.

Other features and aspects will be apparent from the following detailed description, the drawings, and the claims.

### BRIEF DESCRIPTION OF THE DRAWINGS

Fig. 1 is a schematic diagram showing a vehicle according to a first embodiment.
Fig. 2 is a flowchart showing a series of processes related to control of content displayed on a display according to the first embodiment.
Fig. 3 is a schematic diagram illustrating a start image included in a start video of a demonstration mode according to the first embodiment.
Fig. 4 is a schematic diagram illustrating a stationary state image included in a stationary state video according to the first embodiment.
Fig. 5 is a schematic diagram illustrating a first guide image included in the stationary state video according to the first embodiment.
Fig. 6 is a schematic diagram illustrating a first traveling state image included in a first traveling state video according to the first embodiment.
Fig. 7 is a schematic diagram illustrating a second guide image included in the first traveling state video according to the first embodiment.
Fig. 8 is a schematic diagram illustrating a driver assistance image included in a driver assistance video according to the first embodiment.
Fig. 9 is a schematic diagram illustrating a third guide image included in the driver assistance video according to the first embodiment.
Fig. 10 is a schematic diagram illustrating a charging state image included in a charging state video according to the first embodiment.
Fig. 11 is a schematic diagram illustrating a fourth guide image included in the charging state video according to the first embodiment.
Fig. 12 is a schematic diagram illustrating a second traveling state image included in a second traveling state video according to the first embodiment.
Fig. 13 is a diagram illustrating a correspondence map stored in a storage according to a second embodiment.
Fig. 14 is a flowchart showing a series of processes related to control of content displayed on a display, executed by an execution device according to the second embodiment.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

A controller 70 according to a first embodiment will now be described with reference to the drawings.

### Overview of Vehicle

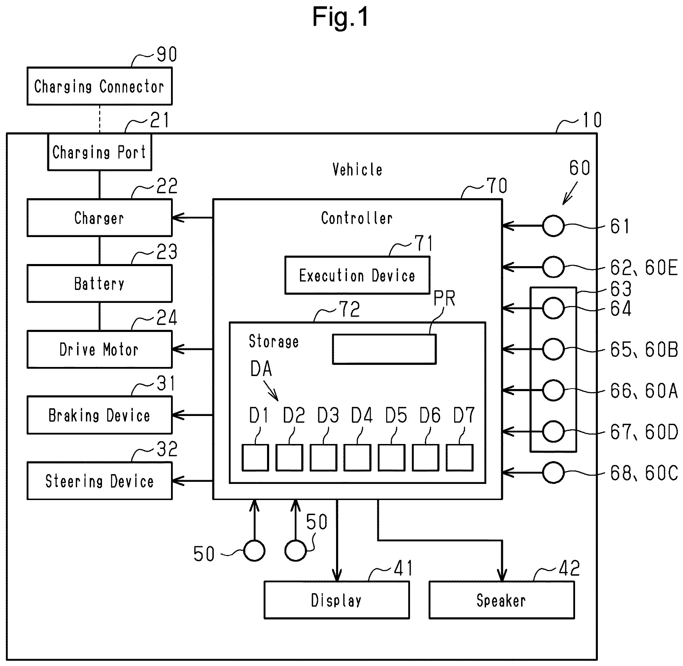

As shown in Fig. 1, a vehicle 10 includes a charging port 21, a charger 22, a battery 23, and a drive motor 24. The vehicle 10 is a battery electric vehicle.

The charging port 21 is connected to a charging connector 90 outside the vehicle 10. When the charging connector 90 is connected to the charging port 21, the battery 23 can be charged by an electric power source outside the vehicle 10.

The drive motor 24 is a drive source of the vehicle 10. The drive motor 24 drives the vehicle 10 by using electric power stored in the battery 23. The battery 23 stores electric power for driving the drive motor 24.

The charger 22 includes a power conversion circuit and a relay that selectively switches connection and disconnection of a power path from the charging port 21 to the battery 23. The battery 23 is charged by controlling the charger 22.

The vehicle 10 includes a braking device 31 and a steering device 32. The braking device 31 mechanically brakes the wheels of the vehicle 10. The braking device 31 includes mechanical brakes. For example, the braking device 31 includes disc brakes.

The steering device 32 is an electric rack-and-pinion steering system. The steering device 32 can change the orientation of steerable wheels of the vehicle 10 by controlling a rack and pinion (not shown).

The vehicle 10 includes a display 41 and a speaker 42. The display 41 is mounted on the vehicle 10. The display 41 is positioned so as to be visible to a driver of the vehicle 10 while the vehicle 10 is traveling. In the present embodiment, the display 41 is a center display. The display 41 displays images and videos. The speaker 42 outputs sound into the interior of the vehicle 10.

The vehicle 10 includes multiple sensors 50, multiple operating members 60, and a controller 70. The sensors 50 include, for example, a vehicle speed sensor, a shift position sensor, a sonar, and a camera sensor. Fig. 1 shows only two of the sensors 50. The sensors 50 output detection signals to the controller 70.

The operating members 60 can be operated by the driver while the vehicle 10 is traveling. The operating members 60 are operated to implement a traveling operation of the vehicle 10. The traveling operation of the vehicle 10 include a traveling function, a charging function, and a driver assistance function. When any of the operating members 60 is operated, the operating member 60 outputs an operation signal to the controller 70.

The operating members 60 include an accelerator pedal 61 and a brake pedal 62. The accelerator pedal 61 is operated by being depressed with a driver's foot when the driver adjusts acceleration while the vehicle 10 is traveling. In other words, the accelerator pedal 61 is operated to implement part of the traveling function that enables the vehicle 10 to travel.

The brake pedal 62 is operated by being depressed with a driver's foot when the driver adjusts deceleration while the vehicle 10 is traveling. In other words, the brake pedal 62 is operated to implement part of the traveling function that enables the vehicle 10 to stop.

The vehicle 10 includes a steering wheel 63. The steering wheel 63 includes a wheel body 64, multiple switches 65, a first touchscreen display 66, and a second touchscreen display 67. The wheel body 64 is operated when the driver adjusts the steering angle while the vehicle 10 is traveling. In other words, the wheel body 64 is operated to implement part of the traveling function that enables the vehicle 10 to turn.

The switches 65 are operated by being pressed by the driver while the vehicle 10 is traveling. For example, when one of the switches 65 is operated, the direction indicator lamps of the vehicle 10 or the hazard warning lights of the vehicle 10 are caused to blink. In other words, the switches 65 are operated to implement part of the traveling operation of the vehicle 10 that is required during traveling.

The first touchscreen display 66 is located near the wheel body 64. The first touchscreen display 66 is operated by being touched by the driver while the vehicle 10 is traveling. The first touchscreen display 66 displays, for example, an operation screen of a driver assistance function described below. In other words, the first touchscreen display 66 is operated to implement a driving function of the vehicle 10.

The second touchscreen display 67 is located near the wheel body 64. The second touchscreen display 67 is operated by being touched by the driver while the vehicle 10 is traveling. The second touchscreen display 67 displays, for example, a screen that allows for selection of a traveling mode of the vehicle 10. The traveling modes include, for example, an eco mode and a sport mode. In other words, the second touchscreen display 67 is operated to implement the traveling function of the vehicle 10.

In the present embodiment, the first touchscreen display 66 is located closer to the front side window on the driver's seat side in the vehicle 10 than the wheel body 64 is. The second touchscreen display 67 is located closer to the front passenger seat of the vehicle 10 than the wheel body 64 is.

The operating members 60 include the wheel body 64, the switches 65, the first touchscreen display 66, and the second touchscreen display 67. The operating members 60 include a charging operation button 68.

The charging operation button 68 is provided near the driver's seat of the vehicle 10. When a specified operation is performed on the charging operation button 68, the charging port 21 is connectable to the charging connector 90 outside the vehicle 10. Specifically, when the charging operation button 68 is operated, the controller 70 opens the cover that covers the connection opening of the charging port 21. The charging operation button 68 can be used only when the vehicle 10 is stationary or when the vehicle 10 is traveling at or below a predetermined constant speed. In other words, the charging operation button 68 is operated to implement the charging function of the vehicle 10.

### Controller

The controller 70 controls charging, traveling, driver assistance, and multimedia output in the vehicle 10. The controller 70 includes an execution device 71, which is a central processing unit (CPU), and a storage 72, which is a memory. The storage 72 stores various programs to be executed by the execution device 71. The execution device 71 controls charging, traveling, driver assistance, and multimedia output in the vehicle 10 by executing the programs. The execution device 71 is processing circuitry including one or more processors that execute various processes in accordance with computer programs (software). The storage 72 is a non-transitory computer-readable storage medium.

With regard to charging of the vehicle 10, the controller 70 opens the cover of the charging port 21 when the specified operation is performed on the charging operation button 68. Next, when detecting that the charging connector 90 is connected to the charging port 21, the controller 70 controls the charger 22 to start charging the battery 23. The controller 70 controls the charger 22 to end the charging of the battery 23 with reference to the state of charge of the battery 23.

With regard to traveling of the vehicle 10, the controller 70 drives the drive motor 24 by using electric power stored in the battery 23. The controller 70 controls the output of the drive motor 24 based on the operated amount of the accelerator pedal 61. The controller 70 controls the output of the braking device 31 based on the operated amount of the brake pedal 62. The controller 70 controls the steering device 32 based on the operated amount of the wheel body 64.

With regard to the driver assistance of the vehicle 10, the controller 70 is capable of implementing multiple functions of an advanced driver assistance system (ADAS). The functions of the ADAS include pre-crash safety (PCS) and adaptive cruise control (ACC). A specific method of implementing each function will not be described in detail. The controller 70 implements various functions based on detection signals from the sensors 50. A specific method of implementing each function will not be described in detail.

The controller 70 controls the output of multimedia content of the vehicle 10. Specifically, the controller 70 controls output to the display 41 and the speaker 42 in a demonstration mode of the vehicle 10 while the vehicle 10 is stationary.

The storage 72 stores an output program PR for outputting multimedia content in the demonstration mode of the vehicle 10. The storage 72 stores multiple video files DA for outputting multimedia content.

Each video file DA is a data file for playback of a video. Each video file DA includes image data to be output to the display 41 and audio data to be output to the speaker 42. The image data includes multiple images that are continuous in time series. The audio data includes, for example, data representing music synchronized with the time series of the image data.

The video files DA include a first file D1 for playback of a demonstration mode start video M1, a second file D2 for playback of a stationary state video M2, and a third file D3 for playback of a first traveling state video M3. The video files DA also include a fourth file D4 for playback of a driver assistance video M4 and a fifth file D5 for playback of a charging state video M5. In addition, the video files DA include a sixth file D6 for playback of a second traveling state video M6 and a seventh file D7 for playback of a demonstration mode termination video M7. As described above, in the present embodiment, the storage 72 stores seven video files DA.

In the present embodiment, there are the following five combinations of a first video and a second video. In a first combination, the stationary state video M2 corresponds to the first video, and the second file D2 corresponds to a first video file. In this case, the first traveling state video M3 corresponds to the second video, and the third file D3 corresponds to a second video file.

In a second combination, the first traveling state video M3 corresponds to the first video, and the third file D3 corresponds to the first video file. In this case, the driver assistance video M4 corresponds to the second video, and the fourth file D4 corresponds to the second video file.

In a third combination, the driver assistance video M4 corresponds to the first video, and the fourth file D4 corresponds to the first video file. In this case, the charging state video M5 corresponds to the second video, and the fifth file D5 corresponds to the second video file.

In a fourth combination, the charging state video M5 corresponds to the first video, and the fifth file D5 corresponds to the first video file. In this case, the second traveling state video M6 corresponds to the second video, and the sixth file D6 corresponds to the second video file.

In a fifth combination, the second traveling state video M6 corresponds to the first video, and the sixth file D6 corresponds to the first video file. In this case, the demonstration mode termination video M7 corresponds to the second video, and the seventh file D7 corresponds to the second video file.

As described below, each of the first traveling state video M3, the driver assistance video M4, and the second traveling state video M6 includes an image simulating a state in which the vehicle 10 is traveling. Accordingly, in any of the combinations, at least one of the first video and the second video is an image simulating a state in which the vehicle 10 is traveling.

### Control of Output to the Display

When an operation of initiating display in the multimedia demonstration mode is performed in the vehicle 10, the execution device 71 starts execution of the output program PR, on condition that the vehicle 10 is stationary. Upon starting execution of the output program PR, the execution device 71 executes a series of processes for multimedia output using the video files DA. The execution device 71 determines that the vehicle 10 is stationary when the shift position of the vehicle 10 is in a parking position and the vehicle speed is zero.

### Demonstration Mode Start Video

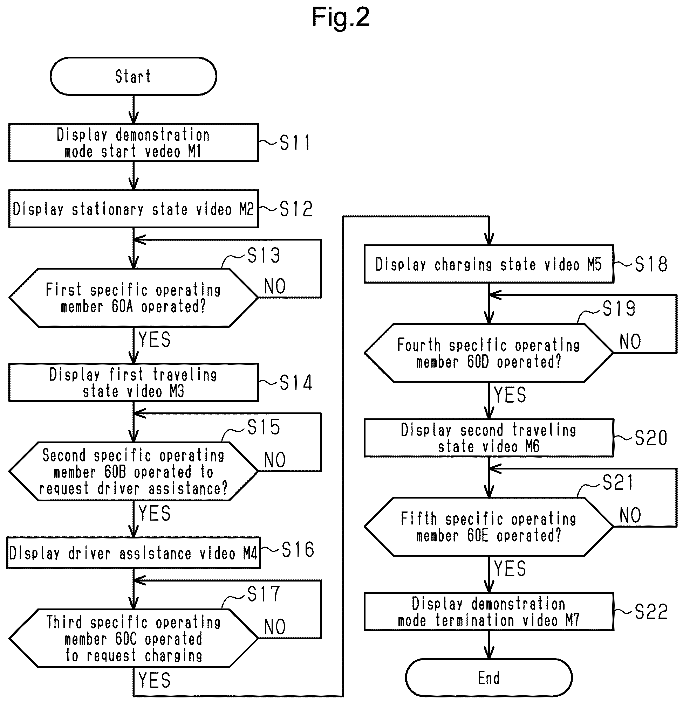

As shown in Fig. 2, when starting execution of the output program PR, the execution device 71 first performs the process of step S11. In step S11, the execution device 71 plays the demonstration mode start video M1. Specifically, the execution device 71 causes the display 41 to display an image included in the first file D1 for playing the demonstration mode start video M1, and causes the speaker 42 to output sound included in the first file D1.

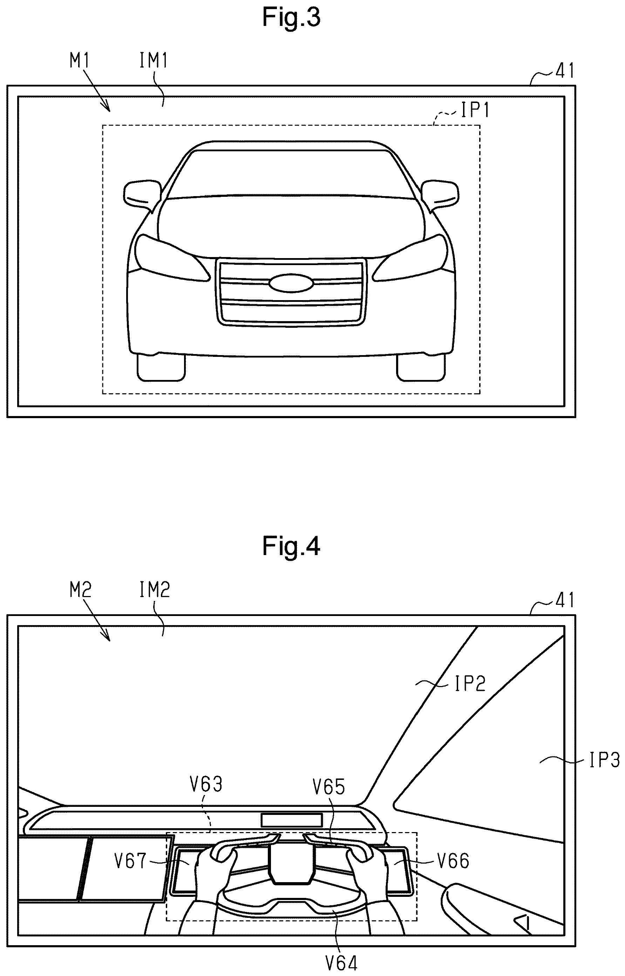

As shown in Fig. 3, the demonstration mode start video M1 includes a start image IM1 indicating the start of the demonstration mode. The start image IM1 includes an exterior image IP1 showing the exterior of the vehicle 10. For example, the demonstration mode start video M1 may be a video in which images of the vehicle 10 viewed from the front, from the right side, from the rear, and from the left side are sequentially presented in time, thereby showing the exterior of the vehicle 10 from different directions.

As shown in Fig. 2, when a predetermined period has elapsed after the demonstration mode start video M1 is displayed, the execution device 71 ends playback of the demonstration mode start video M1. Thereafter, the execution device 71 advances the process to step S12.

In step S12, the execution device 71 plays the stationary state video M2. Specifically, the execution device 71 causes the display 41 to display an image included in the second file D2 for playing the stationary state video M2, and causes the speaker 42 to output sound included in the second file D2.

### Stationary State Video

As shown in Fig. 4, the stationary state video M2 includes a stationary state image IM2, which simulates the field of view from the driver's seat when the vehicle 10 is stationary. The stationary state image IM2 represents an image from the driver's perspective as seen from the driver's seat of the vehicle 10. The image from the driver's perspective is an image of a range including a steering wheel image V63 representing the steering wheel 63 and a partial image IP2 representing a part of the windshield of the vehicle 10 in the front range viewed from the driver's seat. In addition, the image from the driver's perspective is an image of a range including a partial image IP3 representing a part of the front side window of the driver's seat side in the front range seen from the driver's seat of the vehicle 10. The steering wheel image V63 includes a wheel body image V64 representing the wheel body 64 and a switch image V65 representing the switches 65. The steering wheel image V63 includes a first touchscreen display image V66 representing the first touchscreen display 66 and a second touchscreen display image V67 representing the second touchscreen display 67. The stationary state image IM2 shows a state in which both hands of the driver are gripping the wheel body 64.

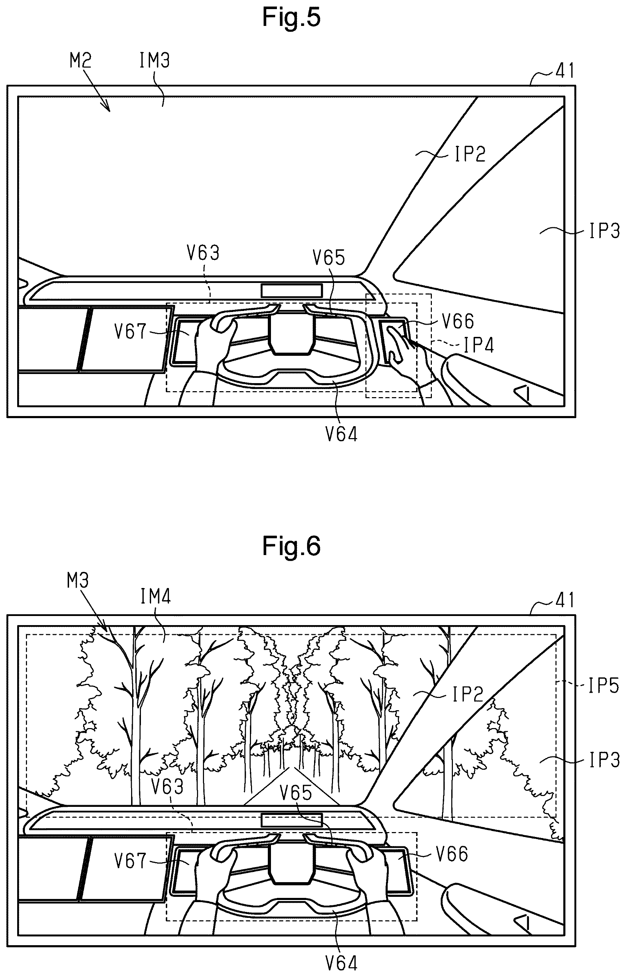

As shown in Fig. 5, the stationary state video M2 includes a first guide image IM3 subsequent in time series to the stationary state image IM2. Similar to the stationary state image IM2, the first guide image IM3 is an image from the driver's perspective. The first guide image IM3 is an image representing operation of a first specific operating member 60A, which is one of the operating members 60 determined in advance to switch the stationary state video M2 to a subsequent video.

The first specific operating member 60A is the operating member 60 for switching display of the stationary state video M2 to a subsequent video while the stationary state video M2 is being displayed. In the present embodiment, the first specific operating member 60A is the first touchscreen display 66. The first guide image IM3 includes a partial image IP4 that guides the user to operate the first touchscreen display 66. Specifically, the partial image IP4 represents a state in which the driver's right hand is operating the first touchscreen display 66, which is the first specific operating member 60A.

In the images of the stationary state video M2 that are continuous in time series, the image of the scenery outside the vehicle 10 does not change. Specifically, the images of the stationary state video M2 that are continuous in time series do not show the scenery outside the vehicle 10.

As shown in Fig. 2, the execution device 71 displays the stationary state video M2 in step S12, and then advances the process to step S13. In step S13, the execution device 71 determines whether the first specific operating member 60A has been operated. When the first specific operating member 60A, that is, the first touchscreen display 66 has not been operated (S13: NO), the execution device 71 repeats the process of step S13. In contrast, when the first specific operating member 60A has been operated (S13: YES), the execution device 71 advances the processing to step S14. The stationary state video M2 continues to be played until an affirmative determination is made in step S13.

In step S14, the execution device 71 plays the first traveling state video M3 in place of the stationary state video M2. Specifically, the execution device 71 causes the display 41 to display an image included in the third file D3 for playing the first traveling state video M3, and causes the speaker 42 to output sound included in the third file D3.

In other words, the execution device 71 causes the display 41 to display the first traveling state video M3 in place of the stationary state video M2 on condition that the first specific operating member 60A has been operated while the stationary state video M2 is displayed on the display 41 of the vehicle 10 in a stationary state.

### First Traveling State Video

As shown in Fig. 6, the first traveling state video M3 includes a first traveling state image IM4 that simulates the field of view from the driver in the driver's seat while the vehicle 10 is traveling. The first traveling state image IM4 is an image simulating a traveling state of the vehicle 10. Similar to the stationary state image IM2, the first traveling state image IM4 is an image from the driver's perspective.

The first traveling state image IM4 includes a first background image IP5 that represents scenery outside the vehicle 10. The first background image IP5 represents the vehicle 10 traveling on a road surrounded by trees. In the images of the first traveling state video M3 that are continuous in time series, the image of the scenery outside the vehicle 10 changes so as to represent the vehicle 10 traveling.

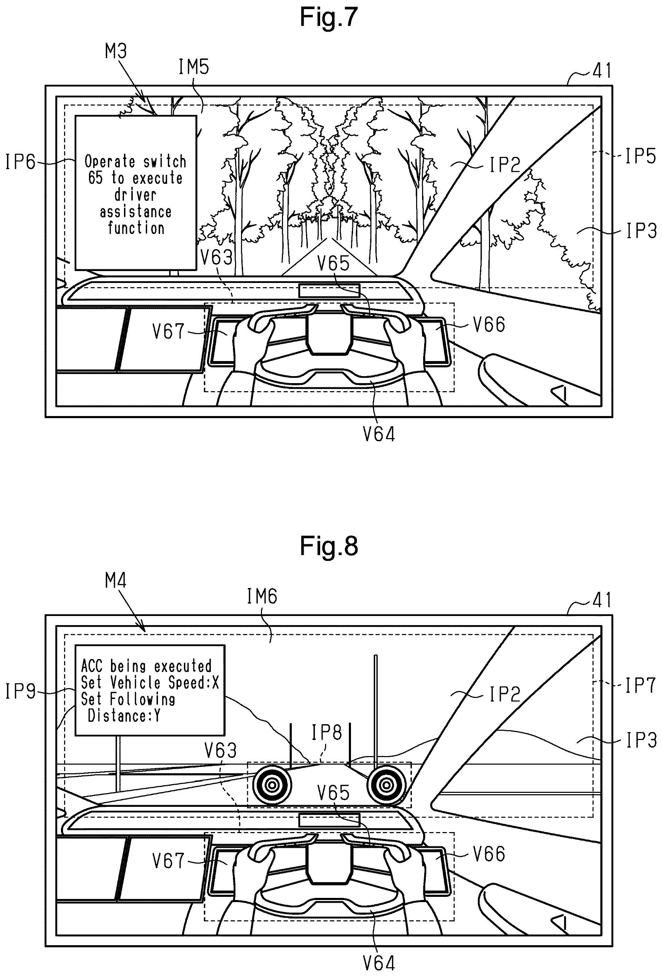

As shown in Fig. 7, the first traveling state video M3 includes a second guide image IM5 subsequent in time series to the first traveling state image IM4. Similar to the stationary state image IM2, the second guide image IM5 is an image from the driver's perspective. The second guide image IM5 includes a text image IP6 showing a message that inquires whether to execute a driver assistance function. The text image IP6 indicates that one of the switches 65 needs to be operated to execute the ADAS function. Specifically, the text image IP6 shows, as a message, the text: "Operate switch 65 to execute driver assistance function."

As shown in Fig. 2, the execution device 71 displays the first traveling state video M3 in step S14, and then advances the process to step S15. In step S15, the execution device 71 determines whether an operation for requesting driver assistance has been performed. The operation for requesting driver assistance is operation of a second specific operating member 60B. The second specific operating member 60B is one of the operating members 60 determined in advance to switch the first traveling state video M3 to a subsequent video. The second specific operating member 60B is one of the switches 65. Accordingly, the execution device 71 determines whether the switch 65 has been operated to request the driver assistance.

When the switch 65 has not been operated to request the function of driver assistance (S15: NO), the execution device 71 repeats the process of step S15. In contrast, when the switch 65 is operated to request the function of driver assistance (S15: YES), the execution device 71 advances the process to step S16. The first traveling state video M3 continues to be played until an affirmative determination is made in step S15.

### Driver Assistance Video

In step S16, the execution device 71 plays the driver assistance video M4. Specifically, the execution device 71 causes the display 41 to display an image included in the fourth file D4 for playing the driver assistance video M4, and causes the speaker 42 to output sound included in the fourth file D4.

In other words, the execution device 71 causes the display 41 to display the driver assistance video M4 in place of the first traveling state video M3 on condition that the second specific operating member 60B has been operated while the first traveling state video M3 is displayed on the display 41 of the vehicle 10 in a stationary state. The condition in this case is that the second specific operating member 60B has been operated to request driver assistance.

As shown in Fig. 8, the driver assistance video M4 includes a driver assistance image IM6 that simulates a state in which the vehicle 10 is traveling and the driver assistance function is being executed. The driver assistance image IM6 is an image representing a state in which the driver assistance function of the vehicle 10 is being executed. Similar to the stationary state image IM2, the driver assistance image IM6 is an image from the driver's perspective.

The driver assistance image IM6 includes a second background image IP7 that represents scenery outside the vehicle 10. The second background image IP7 is scenery different from the first background image IP5. Further, the driver assistance image IM6 includes a partial image IP8 representing a state in which a preceding vehicle is present ahead of the vehicle 10. In the present embodiment, the partial image IP8 represents the preceding vehicle with a virtual icon.

The driver assistance image IM6 includes a partial image IP9 indicating that the driver assistance is being executed. The partial image IP9 shows, for example, the driver assistance function being executed, a set vehicle speed, detection of a preceding vehicle, and a set following distance. In the example shown in Fig. 8, the partial image IP9 shows that ACC is being executed.

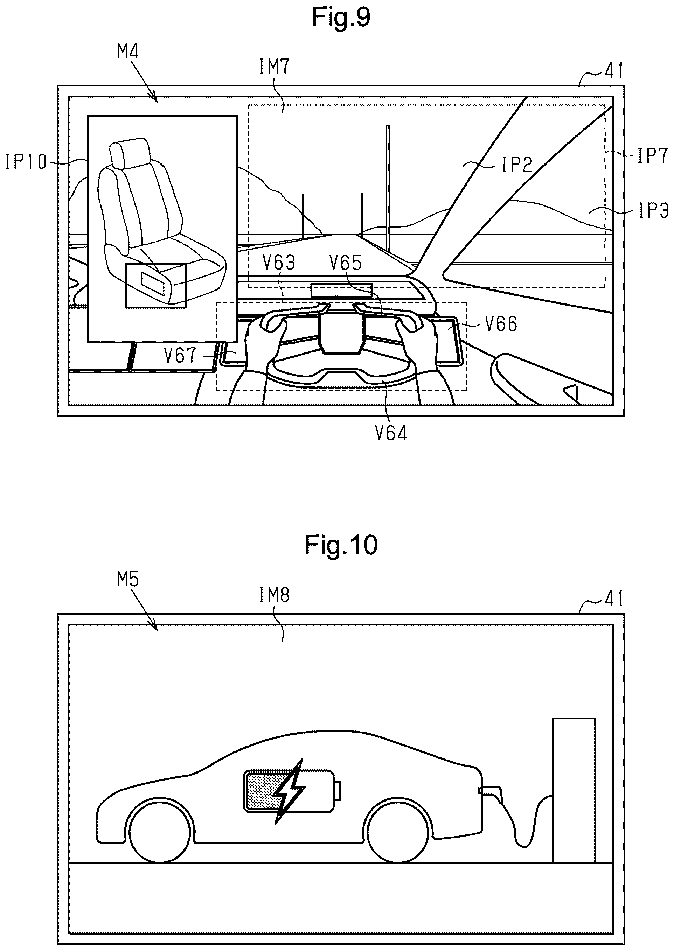

As shown in Fig. 9, the driver assistance video M4 includes a third guide image IM7 subsequent in time series to the driver assistance image IM6. Similar to the stationary state image IM2, the third guide image IM7 is an image from the driver's perspective. The third guide image IM7 includes a partial image IP10 that guides the user to perform operation for charging the battery 23. The partial image IP10 indicates that the charging operation button 68 provided in the driver's seat in the vehicle 10 should be operated.

As shown in Fig. 2, the execution device 71 displays the driver assistance video M4 in step S16, and then advances the process to step S17. In step S17, the execution device 71 determines whether an operation for charging has been performed. The operation for charging is operation of a third specific operating member 60C. The third specific operating member 60C is one of the operating members 60 determined in advance to switch the driver assistance video M4 to a subsequent video. The third specific operating member 60C is the charging operation button 68. Accordingly, the execution device 71 determines whether an operation for performing charging using the charging operation button 68 has been performed.

When the charging operation button 68 has not been operated (S17: NO), the execution device 71 repeats the process of step S17. When the charging operation button 68 has been operated (S17: YES), the execution device 71 advances the process to step S18. The driver assistance video M4 continues to be played until an affirmative determination is made in step S17.

In step S18, the execution device 71 plays the charging state video M5. Specifically, the execution device 71 causes the display 41 to display an image included in the fifth file D5 for playing the charging state video M5, and causes the speaker 42 to output sound included in the fifth file D5

In other words, the execution device 71 causes the display 41 to display the charging state video M5 in place of the driver assistance video M4 on condition that the third specific operating member 60C has been operated while the driver assistance video M4 is displayed on the display 41 of the vehicle 10 in a stationary state. The condition in this case is that an operation for performing charging using the third specific operating member 60C has been performed.

### Charging State Video

As shown in Fig. 10, the charging state video M5 includes a charging state image IM8 that simulates a state in which the battery 23 of the vehicle 10 is being charged. The charging state image IM8 is an image that simulates a state in which the battery 23 of the vehicle 10 is being charged. The charging state image IM8 represents a state in which the charging connector 90 is connected to the charging port 21 of the vehicle 10. The charging state image IM8 shows that the battery 23 of the vehicle 10 is being charged. The charging state video M5 shows a state in which the electric power stored in the battery 23 gradually increases.

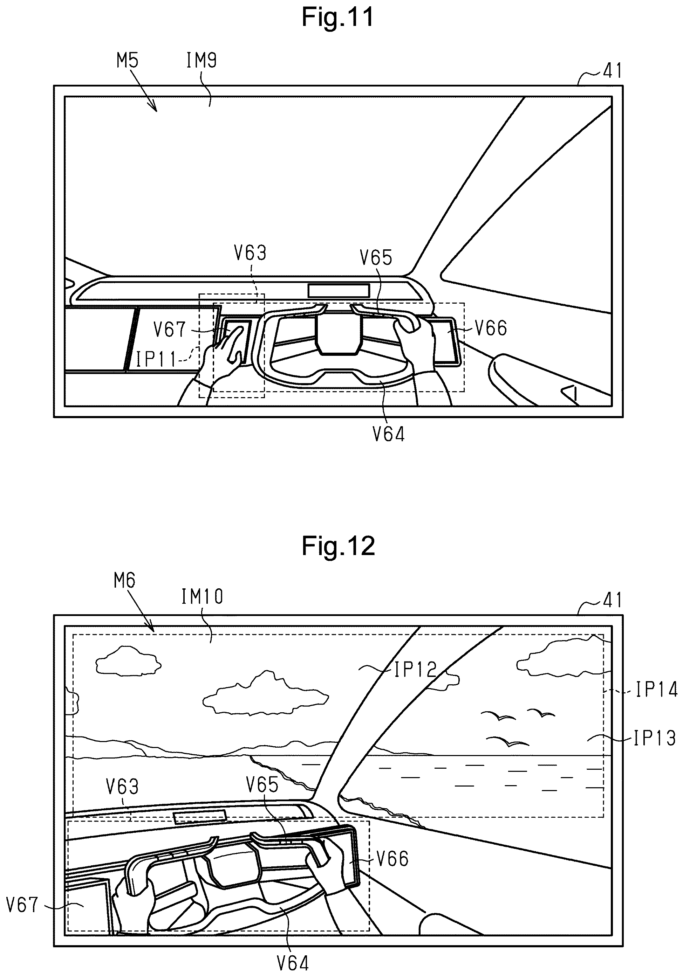

As shown in Fig. 11, the charging state video M5 includes a fourth guide image IM9 subsequent in time series to the charging state image IM8. Similar to the stationary state image IM2, the fourth guide image IM9 is an image from the driver's perspective. The fourth guide image IM9 is an image representing operation of a fourth specific operating member 60D, which is one of the operating members 60 determined in advance to switch the charging state video M5 to a subsequent video.

The fourth specific operating member 60D is the operating member 60 for switching display of the charging state video M5 to a subsequent video while the charging state video M5 is being displayed. In the present embodiment, the fourth specific operating member 60D is the second touchscreen display 67. The fourth guide image IM9 includes a partial image IP11 that guides the user to operate the second touchscreen display 67.

As shown in Fig. 2, the execution device 71 displays the charging state video M5 in step S18, and then advances the process to step S19. In step S19, the execution device 71 determines whether the fourth specific operating member 60D has been operated. When the fourth specific operating member 60D, that is, the second touchscreen display 67, has not been operated (S19: NO), the execution device 71 repeats the process of step S19. In contrast, when the fourth specific operating member 60D has been operated (S19: YES), the execution device 71 advances the processing to step S20. The charging state video M5 continues to be played until an affirmative determination is made in step S19.

In step S20, the execution device 71 displays the second traveling state video M6. Specifically, the execution device 71 causes the display 41 to display an image included in the sixth file D6 for playing the second traveling state video M6, and causes the speaker 42 to output sound included in the sixth file D6

In other words, the execution device 71 causes the display 41 to display the second traveling state video M6 in place of the charging state video M5 on condition that the fourth specific operating member 60D has been operated while the charging state video M5 is displayed on the display 41 of the vehicle 10 in a stationary state.

### Second Traveling State Video

As shown in Fig. 12, the second traveling state video M6 includes a second traveling state image IM10 that simulates the field of view from the driver in the driver's seat while the vehicle 10 is traveling. The second traveling state image IM10 is an image simulating a traveling state of the vehicle 10. The second traveling state image IM10 is an image from the driver's perspective, but the captured range is different from the range of the first traveling state image IM4. Specifically, the range represented by the second traveling state image IM10 is shifted toward the front side window on the driver's seat side from the range represented by the first traveling state image IM4. Accordingly, a partial image IP13 that shows the front side window on the driver's seat side shown in the second traveling state image IM10 represents a wider range than the partial image IP3, which shows the front side window on the driver's seat side shown in the first traveling state image IM4. In contrast, a partial image IP12 that shows the windshield on shown in the second traveling state image IM10 represents a narrower range than the partial image IP2, which shows the windshield shown in the first traveling state image IM4. The second traveling state video M6 includes a third background image IP14 that represents scenery outside the vehicle 10. The third background image IP14 is scenery different from the first background image IP5. Specifically, the third background image IP14 represents a traveling state of the vehicle 10 on a coastal road.

The second traveling state video M6 further includes audio data containing a guide sound. The guide sound presents a message inquiring whether to terminate the simulated traveling state of the vehicle 10. The guide sound instructs the user, while the second traveling state video M6 is being displayed, to operate a fifth specific operating member 60E, which is one of the operating members 60 that is used to switch the display to a subsequent video. In the present embodiment, the fifth specific operating member 60E is the brake pedal 62. Specifically, the guide sound provides an audio message stating: "If you wish to stop vehicle 10, please operate brake pedal 62."

As shown in Fig. 2, the execution device 71 displays the second traveling state video M6 in step S20, and then advances the process to step S21. In step S21, the execution device 71 determines whether the fifth specific operating member 60E has been operated. Specifically, the execution device 71 determines whether the brake pedal 62 has been operated.

When the fifth specific operating member 60E has not been operated (S21: NO), the execution device 71 repeats the process of step S21. In contrast, when the fifth specific operating member 60E has been operated (S21: YES), the execution device 71 advances the processing to step S22. The second traveling state video M6 continues to be played until an affirmative determination is made in step S21.

In step S22, the execution device 71 displays the demonstration mode termination video M7. The demonstration mode termination video M7 is a video indicating termination of the demonstration mode in the vehicle 10.

In other words, the execution device 71 causes the display 41 to display the demonstration mode termination video M7 in place of the second traveling state video M6 on condition that the fifth specific operating member 60E has been operated while the second traveling state video M6 is displayed on the display 41 of the vehicle 10 in a stationary state.

Thereafter, when playback of the demonstration mode termination video M7 ends, the execution device 71 terminates the current series of processes. In the present embodiment, when playback of the demonstration mode termination video M7 ends, the execution device 71 displays content that again accepts an operation of initiating the demonstration mode.

### Operation of the First Embodiment

The first embodiment allows the user in the driver's seat of the vehicle 10 to experience multimedia output using the display 41 and the speaker 42 when performing the operation of initiating the demonstration mode.

The user is guided, via the display 41 and the speaker 42, as to the operation required for switching to the subsequent video. Accordingly, by performing the guided operation, the user switches the video.

### Advantages of the First Embodiment

(1-1) In the first embodiment, the storage 72 stores the first video file for playback of the first video and the second video file for playback of the second video. Specifically, the video files DA include the first video file and the second video file. At least one of the first video and the second video includes an image simulating a traveling state of the vehicle 10. The execution device 71 causes the display 41 to display the second video in place of the first video on condition that one of the operating members 60 has been operated while the first video is displayed on the display 41 of the vehicle 10 in a stationary state.

According to the above-described configuration, the controller 70 is capable of providing the user of the vehicle 10 with an experience in which a video simulating a traveling state of the vehicle 10, displayed on the display 41, is switched in accordance with operation of the vehicle 10.

The user in the driver's seat of the vehicle 10 operates the operating members 60 while the vehicle 10 is traveling. Accordingly, even when the vehicle 10 is stationary, the user can operate the operating member 60, which would otherwise be operated while the vehicle 10 is traveling, to experience a switch to a video simulating the traveling state of the vehicle 10, or a switch from a video simulating the traveling state of the vehicle 10.

(1-2) In the first embodiment, the execution device 71 causes the second video to be displayed in place of the first video on condition that a specific operating member 60 among the multiple operating members 60 is operated. Even when an operating member 60 different from the specific operating member 60 is operated, the execution device 71 does not switch the video displayed on the display 41. Accordingly, the controller 70 can link the type of operating member 60 with the content displayed on the display 41.

(1-3) In the first combination of the first video and the second video in the first embodiment, the first video is the stationary state video M2, and the second video is the first traveling state video M3. The execution device 71 causes the display 41 to display the first traveling state video M3 in place of the stationary state video M2 on condition that the first specific operating member 60A has been operated when the stationary state video M2 is displayed on the display 41. This allows the user in the driver's seat of the vehicle 10 toe experience switching from the video simulating a stationary state of the vehicle 10 to the video simulating a traveling state of the vehicle 10 by operating the first specific operating member 60A. In particular, for example, a user considering the purchase of the vehicle 10 may not be able to experience actual driving of the vehicle 10 when merely seated in the stationary vehicle 10 at a showroom. In such a case, even though the vehicle 10 is not traveling, the user can view a video in which the display switches from a stationary state video to a traveling state video, together with the experience of operating the operating member 60. Accordingly, the controller 70 can influence the user's purchase motivation.

(1-4) In the second combination of the first video and the second video in the first embodiment, the first video is the first traveling state video M3, and the second video is the driver assistance video M4. The execution device 71 causes the display 41 to display the driver assistance video M4 in place of the first traveling state video M3 on condition that the second specific operating member 60B has been operated when the first traveling state video M3 is displayed on the display 41. This allows the user in the driver's seat of the vehicle 10 to experience switching from a video indicating a state in which the driver assistance is not being executed to a video indicating a state in which the driver assistance is being executed by operating the second specific operating member 60B. In particular, even if the user has never previously used the driver assistance function, the user can nonetheless experience a state in which driver assistance is executed. For example, although driver assistance is not actually being executed, the user can experience both the act of performing an operation to activate driver assistance and the subsequent viewing of a video representing the activated driver assistance. In this manner, the user is able to gain a sense of reassurance with respect to executing the driver assistance function.

(1-5) In the third combination of the first video and the second video in the first embodiment, the first video is the driver assistance video M4, and the second video is the charging state video M5. The execution device 71 causes the display 41 to display the charging state video M5 in place of the driver assistance video M4 on condition that the third specific operating member 60C has been operated when the driver assistance video M4 is displayed on the display 41. This allows the user in the driver's seat of the vehicle 10 to experience the operation for charging the battery 23 by operating the third specific operating member 60C. For example, a user considering the purchase of the vehicle 10, which is a battery electric vehicle, may wish to check the operation required to charge the battery 23 prior to purchase. For such a user, the controller 70 provides both an experience of performing the operation associated with charging the battery 23 and the viewing of a video representing the battery 23 being charged in response to that operation. In this manner, by enabling the user to virtually experience charging of the battery 23, the controller 70 allows the user to check the charging procedure before actual use.

(1-6) In the fourth combination of the first video and the second video in the first embodiment, the first video is the charging state video M5, and the second video is the second traveling state video M6. The execution device 71 causes the display 41 to display the second traveling state video M6 in place of the charging state video M5 on condition that the fourth specific operating member 60D has been operated when the charging state video M5 is displayed on the display 41. Accordingly, the user who is experiencing the demonstration mode can view the second traveling state video M6, which is different from the first traveling state video M3.

(1-7) In the fifth combination of the first video and the second video in the first embodiment, the first video is the second traveling state video M6, and the second video is the demonstration mode termination video M7. The execution device 71 causes the display 41 to display the demonstration mode termination video M7 in place of the second traveling state video M6 on condition that the fifth specific operating member 60E has been operated when the second traveling state video M6 is displayed. Accordingly, the user who is experiencing the demonstration mode can experience the switching of the video according to operation of the fifth specific operating member 60E in addition to the first specific operating member 60A to the fourth specific operating member 60D.

(1-8) The image simulating a state in which the vehicle 10 is traveling is an image of a range including the steering wheel image V63 of the vehicle 10 and the partial image IP2 showing a part of the windshield of the vehicle 10 in the front range viewed from the driver's seat of the vehicle 10. Accordingly, a user seated in the driver's seat of the vehicle 10 can view a video representing the state in which the user is actually driving the vehicle 10, which is a state in which the vehicle 10 is traveling. In this manner, the user seated in the driver's seat of the vehicle 10 can virtually experience the state of driving the vehicle 10.

(1-9) The image simulating a state in which the vehicle 10 is traveling is an image of a range including the partial image IP3 representing a part of the front side window on the driver's seat side in the front range viewed from the driver's seat. Accordingly, the user seated in the driver's seat of the vehicle 10 can virtually experience the driver's perspective, including scenery visible through the front side window during driving of the vehicle 10.

### Second Embodiment

A controller 70 according to a second embodiment will now be described with reference to the drawings. For components having the same configuration as in the first embodiment, explanation is simplified or omitted. The second embodiment is different from the first embodiment in that the storage 72 stores a correspondence map MP. Further, the second embodiment is different from the first embodiment in that the execution device 71 executes the output program PR with reference to the correspondence map MP to switch videos.

### Correspondence Map

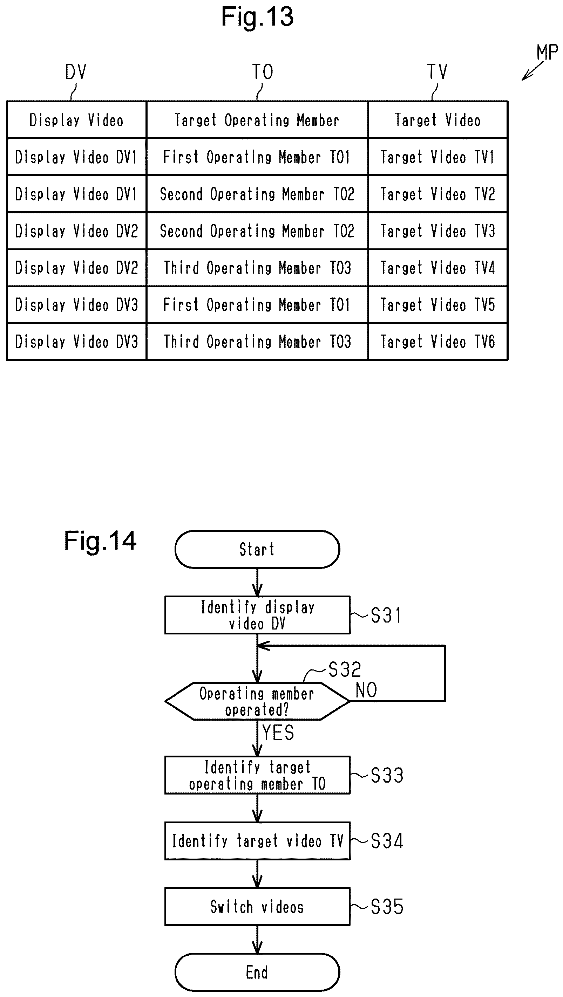

As shown in Fig. 13, the storage 72 stores the correspondence map MP. The correspondence map MP defines combinations of a display video DV, a target operating member TO, and a target video TV for switching videos. The display video DV is a video currently being displayed on the display 41 as image data. The target video TV is a video to be switched to. The target operating member TO is a specific operating member 60 that effects switching from the corresponding display video DV to the target video TV.

In the following description, when distinguishing among multiple display videos DV, the display videos are referred to as display video DV1 through display video DV3. When distinguishing among multiple target operating members TO, the operating members are referred to as first operating member TO1 through third operating member TO3. When distinguishing among multiple target videos TV, the videos are referred to as target video TV1 through target video TV5. In addition, the display video DV corresponds to the first video, and the target video TV corresponds to the second video.

In the example shown in Fig. 13, the correspondence map MP indicates that, when the first operating member TO1 is operated while the display video DV1 is displayed, the displayed content is switched to the target video TV1. The correspondence map MP further indicates that, when the second operating member TO2 is operated while the display video DV1 is displayed, the displayed content is switched to the target video TV2. The correspondence map MP also indicates that, even if the third operating member TO3 is operated while the display video DV1 is displayed, the displayed content is not switched.

The correspondence map MP further indicates that, when the second operating member TO2 is operated while the display video DV2 is displayed, the displayed content is switched to the target video TV3. The correspondence map MP further indicates that, when the third operating member TO3 is operated while the display video DV2 is displayed, the displayed content is switched to the target video TV4. The correspondence map MP also indicates that, even if the first operating member TO1 is operated while the display video DV2 is displayed, the displayed content is not switched.

The correspondence map MP further indicates that, when the first operating member TO1 is operated while the display video DV3 is displayed, the displayed content is switched to the target video TV5. The correspondence map MP further indicates that, when the third operating member TO3 is operated while the display video DV3 is displayed, the displayed content is switched to the target video TV4. The correspondence map MP also indicates that, even if the second operating member TO2 is operated while the display video DV3 is displayed, the displayed content is not switched.

Specifically, when an operation of initiating the display of the multimedia in the demonstration mode is performed in the vehicle 10, the execution device 71 displays an image indicating a list of videos that can be played using the multiple video files DA on the display 41.

Then, the video selected by the user's operation from the video list displayed on the display 41 is played. Accordingly, the execution device 71 causes the display 41 to display an image represented by image data included in the selected video file DA. When a video using the video file DA is played on the display 41, the execution device 71 starts execution of the output program PR.

As shown in Fig. 14, when the execution device 71 starts executing the output program PR, the execution device 71 first performs the process of step S31. In step S31, the execution device 71 identifies the display video DV. Thereafter, the execution device 71 advances the process to step S32.

In step S32, the execution device 71 determines whether any of the operating members 60 has been operated. When an operation signal is detected from any one of the operating members 60, the execution device 71 determines that the operating member 60 has been operated.

When the operating members 60 have been operated (S32: NO), the execution device 71 repeats the process of step S32. In contrast, when any of the operating members 60 is operated (S32: YES), the execution device 71 advances the process to step S33.

In step S33, the execution device 71 identifies the operated operating member 60. Specifically, the execution device 71 identifies the operated operating member 60 based on an acquired operation signal. Thereafter, the execution device 71 advances the process to step S34.

In step S34, the execution device 71 identifies the target video TV which is a video to be switched to with reference to the correspondence map MP. Specifically, the execution device 71 refers to the correspondence map MP and identifies, as the video to be switched to, the target video TV corresponding to the combination of the display video DV identified in step S31 and the target operating member TO identified in step S33. For example, when the video identified in step S31 is the display video DV1 and the operating member 60 identified in step S33 is the second operating member TO2, the execution device 71 identifies the target video to be switched to as the target video TV2. Thereafter, the execution device 71 advances the process to step S35.

In step S35, the execution device 71 causes the display 41 to display the target video TV identified in step S34 in place of the display video DV2. Accordingly, the execution device 71 ends the current series of processes and starts the next series of processes using the displayed target video TV as the new display video DV. When a predetermined period has elapsed since the operation of initiating the display in the demonstration mode, the execution device 71 stops displaying content on the display 41 and ends the series of processes.

### Operation and Advantages of the Second Embodiment

In addition to advantages (1-1), (1-2), (1-8), and (1-9) of the first embodiment, the second embodiment has the advantage described below.

(2-1) In the second embodiment, the controller 70 selects the target video TV according to the type of the target operating member TO when switching the content displayed on the display 41 from the display video DV, which corresponds to the first video, to the target video TV, which corresponds to the second video. Accordingly, the controller 70 is capable of switching the video to be displayed in accordance with the operating member 60 operated by the user.

(2-2) According to the second embodiment, the controller 70 selects the target video TV in accordance with the type of the display video DV in addition to the type of the target operating member TO. Thus, even when the type of target operating member TO is the same, the controller 70 can cause the target video TV to differ when the display video DV is different.

### Modifications

The above-described embodiments may be modified as follows. The above-described embodiments and the following modifications can be combined if the combined modifications remain technically consistent with each other.

The vehicle 10 is not limited to a battery electric vehicle. For example, the vehicle 10 may use an engine as a drive source. In this case, the vehicle 10 does not necessarily need to include the battery 23. Further, the vehicle 10 may omit the charging port 21 and the charger 22.

The vehicle 10 includes the display 41 and the speaker 42 in order to output multimedia content, but the multimedia content may be content that further outputs, for example, scent or vibration. In this case, the vehicle 10 may further include a device that outputs scent and a device that outputs vibration. The vehicle 10 may omit the speaker 42 as long as the vehicle 10 can at least output image data.

The display 41 is not limited to the center display. For example, the display 41 may be an instrument cluster display, or the first touchscreen display 66 and the second touchscreen display 67 may be used as the display 41. Further, the display 41 does not necessarily need to be a single screen. For example, the center display and the instrument cluster display may be used as the display 41.

It is sufficient that the vehicle 10 be provided with at least one operating member 60. The operating members 60 do not necessarily include some of the accelerator pedal 61, the brake pedal 62, the wheel body 64, the switches 65, the first touchscreen display 66, the second touchscreen display 67, and the charging operation button 68.

The operating members 60 are not limited to the example in the above-described embodiments. For example, the operating members 60 may include switches for opening and closing front side windows. If the display 41 is a touchscreen display, the operating members 60 may be switches displayed on the display 41. Further, for example, the operating members 60 may include the shift lever. The operating members 60 may include any element for implementing the traveling operation of the vehicle 10.

In the above-described embodiment, the controller 70 is provided with the execution device 71, which is processing circuitry including one or more processors that run computer programs (software) to execute various processes. However, the controller 70 may be processing circuitry including one or more dedicated hardware circuits such as application specific integrated circuits (ASIC) that execute at least part of various processes, or a combination thereof. Each processor includes a CPU and memory such as RAM and ROM. The memory stores program codes or commands configured to cause the CPU to execute processes. The memory, namely, a computer-readable medium, includes any available medium that is accessible by a general-purpose or special-purpose computer.

The controller 70 does not necessarily need to control charging in the vehicle 10. For example, when the vehicle 10 does not use the battery 23 as a drive source, charging does not need to be controlled. For example, a device different from the controller 70 may control charging of the battery 23 of the vehicle 10.

The controller 70 does not necessarily need to control traveling of the vehicle 10. For example, a device different from the controller 70 may control traveling of the vehicle 10. The controller 70 does not necessarily need to control driver assistance in the vehicle 10. For example, a device different from the controller 70 may control driver assistance in the vehicle 10. Specifically, the controller 70 may be a multimedia ECU that controls multimedia output, and the vehicle 10 may separately include a driver assistance ECU that controls driver assistance of the vehicle 10.

Driver assistance is not limited to the example in the above-described embodiments. The driver assistance is not limited to advanced driver assistance. It is sufficient that the driver assistance be a function of assisting the braking device 31, the drive motor 24, which is a drive source, and the steering device 32 based on detection signals from the sensors 50.

The controller 70 does not necessarily need to output sound from the speaker 42 as long as at least videos are displayed on the display 41. In addition, the controller 70 may control, in accordance with a video, the output of scent from the device that outputs scent, the output of vibration from the device that outputs vibration, or the like in the above-described modifications.

The video files DA stored in the storage 72 are not limited to the examples of the above-described embodiments. For example, the video files DA may include a file for playback of a video of nighttime traveling and a file for playback of a video of daytime traveling. Further, the video files DA may include a file for playback of a video containing an image of the exterior of the vehicle 10 while traveling.

Among the images included in a video when a video file DA is played, the image simulating the traveling state of the vehicle 10, namely, the traveling state image, may be an image that does not include the partial image IP3, which depicts a portion of the front side window on the driver's seat side.

Further, the traveling state image does not necessarily need to be an image from the driver's perspective. For example, the traveling state image may be an image from the perspective of an occupant in the front passenger seat, or may be an image showing the exterior of the vehicle 10 during traveling.

The images included in each video in the above-described embodiments may be changed. For example, the text image IP6 indicating the message inquiring whether to execute the function of driver assistance in the second guide image IM5 may be shown by an illustration, or the image may be omitted and the message may be conveyed by sound. Sound may be output together with the text image IP6.

For example, the partial image IP8 included in the driver assistance image IM6, which indicates the presence of a preceding vehicle in front of the vehicle 10, is illustrated as a virtual image, but may alternatively be an illustration of the preceding vehicle. In addition, the controller 70 may output, together with the partial image IP9 included in the driver assistance image IM6 indicating that driver assistance is being executed, the actual content of the instrument cluster display during execution of the driver assistance.

The storage 72 may omit some of the five combinations of the first video and the second video. It is sufficient that the storage 72 store at least one combination of the first video and the second video. In addition, it is sufficient that the execution device 71 switch videos in at least one combination of the first video and the second video.

The specific operating member 60 for switching each video to the subsequent video is not limited to the examples in the above-described embodiments. For example, the specific operating member 60 for switching from the stationary state video M2 to the first traveling state video M3 may be the accelerator pedal 61.

The controller 70 may switch the content displayed on the display 41 from the first video to the second video when any one of the operating members 60 is operated. In other words, the execution device 71 does not necessarily need to require operation of the predetermined specific operating member 60 as a condition for displaying the second video.

When displaying the charging state video M5, the controller 70 does not necessarily need to require that the operation for requesting charging of the battery 23 have been performed. For example, when displaying the charging state video M5, the controller 70 may only require that the specific operating member 60 have been operated.

When displaying the driver assistance video M4, the controller 70 does not necessarily need to require that operation for requesting the driver assistance have been performed. For example, when displaying the driver assistance video M4, the controller 70 may only require that the specific operating member 60 have been operated.

The storage 72 may store multiple video files DA by acquiring the video files DA from a server or an external memory outside the vehicle 10. For example, the storage 72 may temporarily store the output program PR by acquiring the output program PR from an external server or an external memory when the execution device 71 starts execution of the output program PR.

In the second embodiment, the execution device 71 may transmit, to an external server, a history of operation of the target operating member TO during execution of the output program PR. For example, by acquiring an operation history of a user prior to purchase of the vehicle 10, the external server can determine which operating member 60 and which target video TV are of interest to the user before purchase of the vehicle 10.

In the second embodiment, the correspondence map MP does not necessarily need to include a target video TV corresponding to the target operating member TO for each display video DV. In other words, the correspondence map MP may only include only target videos TV corresponding to the target operating members TO, regardless of the display videos DV.

The storage 72 does not need to store the correspondence map MP as in the first embodiment.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A controller (70) configured to control an output to a display (41) mounted on a vehicle (10) including an operating member operated to implement a traveling operation, the controller (70) comprising:
a non-transitory computer-readable storage medium (72); and
an execution device (71), wherein
the storage medium (72) stores a first video file for playback of a first video and a second video file for playback of a second video,
at least one of the first video or the second video includes an image simulating a state in which the vehicle (10) is traveling, and
the execution device (71) causes the display (41) to display the second video in place of the first video on condition that the operating member (60) is operated when the vehicle (10) is stationary and the first video is being displayed on the display (41).

2. The controller (70) according to claim 1, wherein
the operating member (60) is one of multiple operating members (60) provided in the vehicle (10), and
the execution device (71) displays the second video on condition that a predetermined specific operating member (60A-60E) among the multiple operating members (60) is operated.

3. The controller (70) according to claim 2, wherein
the operating members (60) include:
a first operating member (TO1) that is the specific operating member (60A); and
a second operating member (TO2) that is different from the first operating member (60B),
the storage medium (72) stores a video corresponding to the first operating member (TO1) and a video corresponding to the second operating member (TO2), and
when causing the second video to be displayed, the execution device (71)
displays the video corresponding to the first operating member (TO1) as the second video if the first operating member (TO1) is operated, and
displays the video corresponding to the second operating member (TO2) as the second video if the second operating member (TO2) is operated.

4. The controller (70) according to claim 3, wherein
the storage medium (72) stores a combination of a video serving as the first video and the first operating member (TO1), and a combination of a video serving as the first video and the second operating member (TO2), and
when causing the second video to be displayed, the execution device (71)
displays, if the operated operating member (60) is the first operating member (TO1), a video serving as the displayed first video and a video corresponding to the first operating member (TO1) as the second video; and
displays, if the operated operating member (TO1) is the second operating member (TO2), a video serving as the displayed first video and a video corresponding to the second operating member (TO2) as the second video.

5. The controller (70) according to claim 1, wherein the operating member (60) is a wheel body (64) of a steering wheel (63) of the vehicle (10), a switch (65) of the steering wheel (63), an accelerator pedal (61) of the vehicle (10), or a brake pedal (62) of the vehicle (10).

6. The controller (70) according to claim 1, wherein the image simulating a state in which the vehicle (10) is traveling includes an image of a range including an image representing a steering wheel of the vehicle (10) and an image representing a part of a windshield of the vehicle (10) in a front range viewed from a driver's seat of the vehicle (10).

7. The controller (70) according to claim 6, wherein the image simulating the state in which the vehicle (10) is traveling includes an image of a range including an image representing a part of a front side window of the vehicle (10) on the driver's seat side in the front range viewed from the driver's seat.

8. The controller (70) according to claim 1, wherein
the first video includes an image simulating a state in which the vehicle (10) is traveling,
the second video includes an image representing a state in which a battery of the vehicle (10) is being charged, and
the execution device (71) displays the second video on condition that an operation for charging the battery has been performed using the operating member (60).

9. The controller (70) according to claim 1, wherein
the first video includes an image obtained by simulating a traveling state of the vehicle (10),
the second video includes an image representing a state in which driver assistance of the vehicle (10) is being executed, and
the execution device (71) displays the second video on condition that the operating member (60) has been operated to request the driver assistance.
